# EUROPEAN PATENT SPECIFICATION

(11) **EP 1 982 588 B1**
(45) Date of publication and mention of the grant of the patent: **08.07.2009**
(21) Application number: 08000206.6
(22) Date of filing: 08.01.2008
(51) Int. Cl.: A01K 93/00

(54) **Angling float**
Angelschwimmer
Flotteur d'angle

(30) Priority: 20.04.2007 GB 0707644
(43) Date of publication of application: 22.10.2008
(73) Proprietor: Drennan International Limited, Oxford, OX4 2EX (GB)
(72) Inventor: Drennan, Peter John, Cuddesdon, Oxon OX44 9HG (GB)
(74) Representative: Blood, Marlon

(56) References cited:
- EP-A- 1 319 334
- WO-A-88/00436
- WO-A-95/24123
- FR-A- 961 866
- FR-A- 2 668 891
- GB-A- 2 040 651

## Description

The present invention relates to an angling float.

Conventionally, angling floats are generally attached to fishing lines by means of an eye through which the line freely extends, and the line is fixed to the float at a point below the eye by being trapped between the float body and a resilient band (e.g. formed from silicone rubber) placed over the body. The eye is positioned on the float body such that it is above the surface of the water in use, whereas the resilient band is below the water surface. A float antenna, which is typically brightly coloured, projects from the top of the float body. When a fish takes the bait or otherwise moves the line in the water, the float is tipped, and this is made plainly visible to the angler by the movement of the antenna.

In conventional floats, the eye through which the fishing line extends is generally attached to the main body of the float by means of a pin section projecting from the eye, which is retained by adhesive in a hole provided in the main body. This method of attachment, however, is unsatisfactory because the eye sometimes becomes detached from the main body of the float during the act of catching a fish.

EP1319334 discloses a float having first and second attachment parts between which an extension section projecting from the eye is entrapped, thereby securing the eye to the float.

FR2668897 discloses an angling float having a retainment member which is fixed externally to the main body of the float.

With this in mind, according to one aspect, the present invention may provide an angling float, comprising
a main body;
an attachment part projecting from the main body, the attachment part including a wall defining an elongate recess for receiving a float antenna; and
a retainment member including a first portion for retaining the float on a fishing line and a second portion, characterised in that the second portion is for securing the retainment member to the attachment part, and the second portion extends, wholly embedded within the wall, around and/or along the recess.

By virtue of the second portion extending within the wall around and/or along the recess, the mechanical interface between the second portion and the wall is large, which facilitates the firm anchoring of the retainment member to the attachment part, but at no space penalty as the second portion is embedded within the volume of the wall. This enables the dimensions of the attachment part, including the thickness of the wall defining the recess, to be kept small.

In a preferred embodiment, the second portion comprises a pair of opposed arms which extend partway around the recess. In other embodiments, the second portion may comprise a single arm which extends partway or completely around the recess. In a still further embodiment, the second portion may comprise an arm which extends in a direction along the recess (but wholly embedded within the volume of the wall).

According to one embodiment, the attachment part is moulded with the second portion pre-inserted into the mould such that the second portion becomes embedded within said wall on formation of the attachment part.

According to another embodiment, the attachment part further comprises a separate ferrule which becomes permanently secured to the attachment part with the second portion of the retainment member being interposed between it and the attachment part. By securing the ferrule permanently to the attachment part, the ferrule becomes part of the attachment part. More specifically, the attachment part may comprise a body section, a head section having a first engagement face, and a ferrule having a second engagement face, the first and second engagement faces being permanently secured to one another with the second portion of the retainment member being held therebetween. The first engagement face may comprise a channel for receiving the second portion of the retainment member. The second engagement face may comprise a channel for receiving the second portion of the retainment member.

The permanent securing of the ferrule to the attachment part can be accomplished using adhesive. Alternatively, it can be accomplished using ultrasonic welding. In the case of the latter, the second engagement face may comprise a ridge adjacent to and following generally the contour of a said channel and adapted to melt during ultrasonic welding and, on resolidification, to secure the second portion, in situ, in said channel.

Exemplary embodiments of the invention are hereinafter described with reference to the accompanying drawings, in which
Figure 1 shows a float in accordance with a first embodiment of the invention;
Figure 2 shows an exploded view of Figure 1 with the main body removed;
Figure 3 shows the parts of Figure 2 in assembled form with certain surfaces removed for illustrative purposes;
Figures 4(a), (b) and (c) show the retainment member in isolation from various views;
Figures 5(a) and (b) illustrate the connection of the retainment member to the float from various views;
Figure 6 shows a float (absent the main body) in accordance with a second embodiment of the invention;
Figure 7 shows an exploded view of Figure 6;
Figures 8(a) and (b) show the attachment part in isolation from various views; and
Figures 9(a), (b) and (c) show the ferrule in isolation from various views.

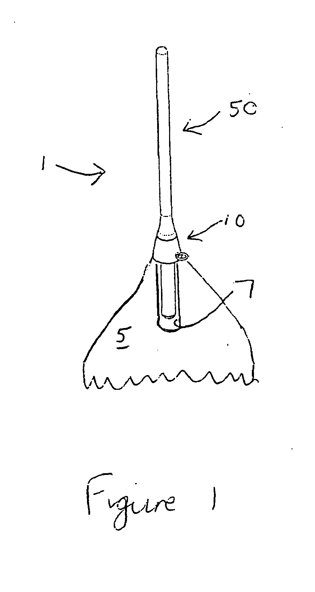

Figure 1 shows a float, generally designated 1, in accordance with an embodiment of the invention. The float 1 comprises a main body 5 which serves to provide the buoyancy necessary for the float, as a whole, to float. Only the upper portion of the main body 5 is shown in the drawings The main body 5 is formed from soft balsa wood. In other embodiments, the main body 5 may be formed from some other buoyant material, for example, a plastics material. The main body 5 has an axial bore 7 extending from its top end partway into the main body.

An elongate attachment part 10 comprises at a first, lower end portion a generally cylindrical body section 12 and at a second, upper end portion a generally frusto-conical head section 14 which narrows towards the upper end. At the lower end of the head section 14, the diameter of the head section 14 is larger than that of the neighbouring portion of the body section 12, whereby its bottom surface defines an annular abutment shoulder 16.

The body section 14 is shaped and dimensioned to fit snugly in the axial bore 7 of the main body 5 with the abutment shoulder 16 sitting on the main body 5 and the head section 14 projecting from the main body 5. The attachment part 10 is fixed permanently into place by means of adhesive.

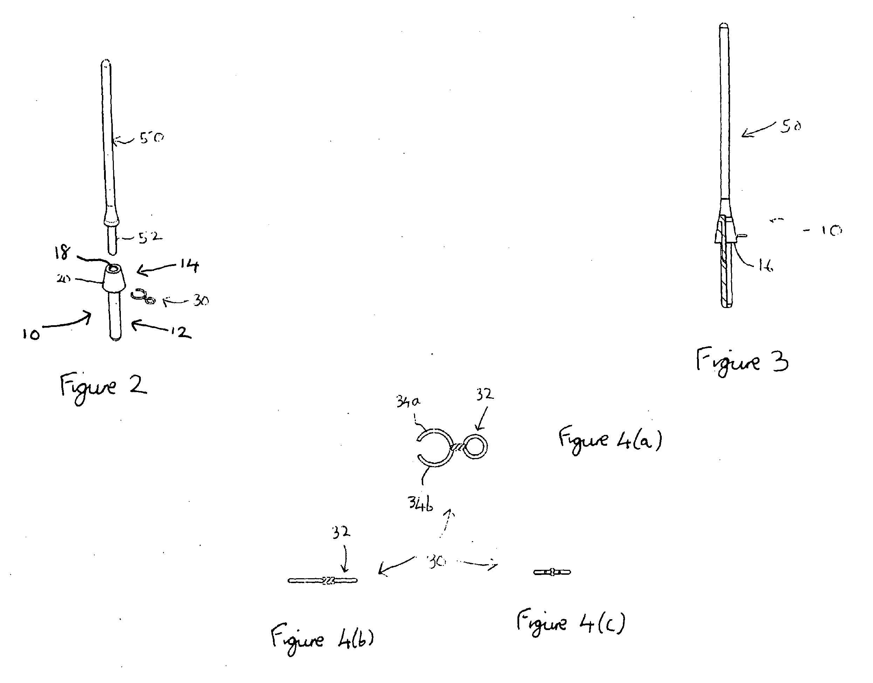

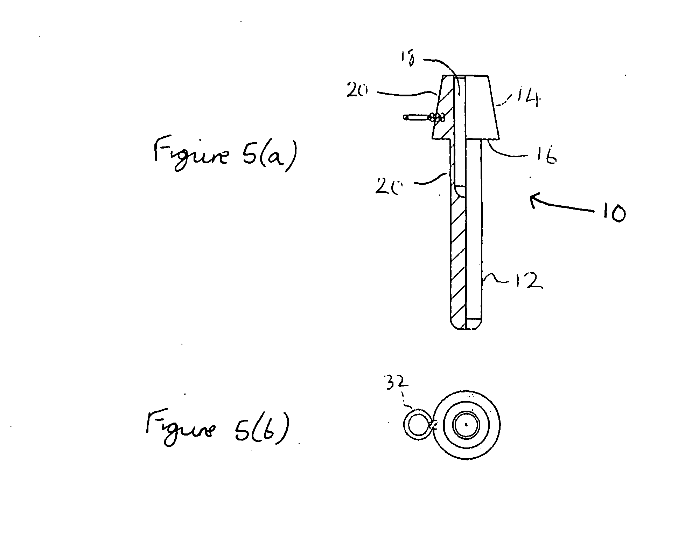

As is clearly visible in the exploded view of Figure 2, the attachment part 10 further comprises a recess 18 which is defined by a wall 20. In Figures 3, 5(a) and 8(b), the attachment part 10 has been illustrated with the left hand half being a vertical section through the part and the thus visible surfaces being shown with hatch shading applied thereto. The right hand half is a normal external view. From an inspection of Figure 5(a), it can be seen that the recess 18 extends from the upper end of the attachment part 10 along its central, major axis right through the head section 14 and partway into the body section 12. The recess 18 is shaped and dimensioned so as to be able to slidingly receive a terminal portion 52 of an antenna 50 as an interference fit. The antenna is preferably brightly coloured or otherwise distinctly marked, so that the float 1 may be clearly seen, and identified in use by the angler to which it belongs and/or other anglers using the same stretch of water. The interference fit between the antenna 50 and the attachment part 10 enables the user to readily change the antenna to use a different one having colour or other markings appropriate to the conditions.

Referring to Figures 4(a-c), the float 1 further comprises a folded wire retainment member 30 having a closed eye 32 and a pair of opposed anchoring arms 34a, 34b projecting from the eye 32.

The attachment part is made from a polycarbonate or other strong polymer by insertion injection moulding with the retainment member 30 being positioned in the mould such that the anchoring arms 34a, 34b become embedded in the wall 20 upon its formation. It will be noted that the shape of the arms 34a, 34b is selected so as to match that of the wall 20, whereby the arms 34a, 34b follow, from within the wall, the contour of the inner surface of the wall 20 and extend around the recess 18 to a considerable extent. In this way, the mechanical interface of the arms 34a, 34b with the surrounding wall structure is large, thereby affording firm anchorage, while at the same time, for this firm anchorage, there is no space penalty as the arms 34a, 34b occupy the same spatial volume as the wall. Thus, the diameter of the attachment part can be kept small.

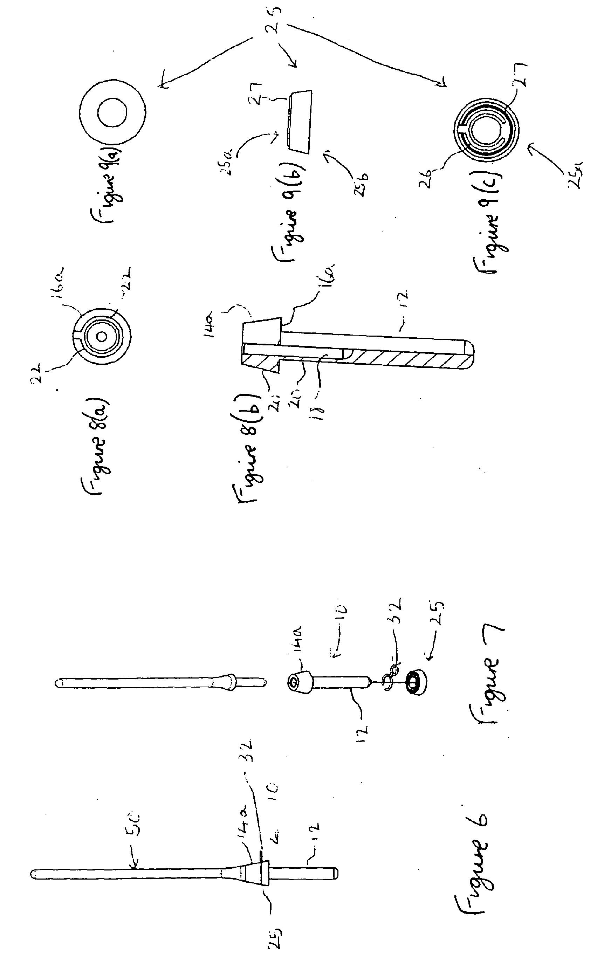

Figures 6 to 9 show a second embodiment of the invention. In respect of the second embodiment, where similar parts to those in the first embodiment exist, the same reference numerals have been used. The second embodiment differs from the first embodiment in that, instead of the retainment member 30 being positioned within the wall 20 on formation of the attachment part 10, it becomes embedded within the wall in a permanent fashion after formation of the attachment part as described below.

An elongate attachment part 10 comprises at a first, lower end portion a generally cylindrical body section 12 and at a second, upper end portion a generally frusto-conical head section 14a which narrows towards the upper end. At the lower end of the head section 14a, the diameter of the head section 14a is larger than that of the neighbouring portion of the body section 12, whereby its bottom surface defines an engagement face 16a. Referring to Figure 8(a), the engagement face 16a defines a channel 22 for receiving the anchoring arms 34a, 34b of the retainment member 34. The elongate attachment 10 further comprises an annular ferrule or collar 25 shaped and dimensioned so as to fit around the body section 12. An upper first face 25a of the ferrule 25 comprises a channel 26, complementary to the channel 22, for receiving the anchoring arms 34a, 34b of the retainment member 30, and a ridge 27 which follows generally the contour of the channel 26 but is parallel to it. On sliding the ferrule 25 along the body section 12, the face 16a of the head section 14a can be brought into engagement with the face 25a of the ferrule 25 with the retainment member 30 interposed therebetween such that the anchoring arms 34a, 34b sit in the orifice formed by channels 22, 26. The anchoring arms 34a, 34b become permanently embedded by the creation of a joint, by ultrasonic welding, between the faces 16a, 25a which causes plastic from the ridge 27 to melt and flow over the adjacent anchoring arms 34a, 34b and on solidifying to lock the anchoring arms 34a, 34b in situ embedded with the wall 18 of the attachment part 10.

In alternative embodiment, the ferrule 25 can simply be permanently fixed to the attachment member 10 by adhesive bonding.

In either case, by virtue of the permanent nature of the connection between the ferrule 25 and the attachment part 10, the ferrule 25 becomes effectively part of a wall of the attachment part 10, whereby it may be said that the anchoring arms are 34a, 34b are embedded within a wall of the attachment part 10. It will be appreciated that a lower face 25b of the ferrule 25 thereafter serves the same role as the annular abutment shoulder 16 of the first embodiment in that it contacts the main body 5 when the attachment part is fitted in the main body 5.

In the second embodiment, both the face 25a of the ferrule 25 and the face 16a of the head section 14a include channels 22,26 which together form an orifice in which the anchoring arms 34a, 34b sit. In other embodiments (not shown), only one of those faces may be provided with a channel formation, the other face simply closing serving to close off the channel.

## Claims

1. An angling float (1), comprising
a main body (5);
an attachment part (10) projecting from the main body (5), the attachment part (10) including a wall (20) defining an elongate recess (18) for receiving a float antenna (50); and
a retainment member (30) including a first portion (32) for retaining the float (1) on a fishing line and a second portion (34a,34b), **characterised in that** the second portion (34a, 34b) is for securing the retainment member (30) to the attachment part (10), and the second portion (34a, 34b) extends, wholly embedded within the wall (20), around and/or along the recess (18).

2. An angling float (1) as in Claim 1, wherein the second portion (34a,34b) comprises a pair of opposed arms (34a,34b) which extend partway around the recess.

3. An angling float (1) as in any preceding claim, wherein the second portion (34a,34b) becomes embedded in the wall (20) on formation of the attachment part (10).

4. An angling float (1) as in Claims 1 or 2, wherein the attachment part (10) further comprises a separate ferrule (25) which is permanently secured to the attachment part (10) with the second portion (34a,34b) of the retainment member (30) being interposed between it and the attachment part.

5. An angling float (1) as in Claim 4, wherein the attachment part (10) comprises a body section (10) and a head section (12) having a first engagement face (16a), wherein the ferrule (25) has a second engagement face (25a), the first and second engagement faces (16a,5a) being permanently secured to one another with the second portion (34a,34b) of the retainment member being held therebetween.

6. An angling float (1) as in Claim 5, wherein the first engagement face (16a) comprises a channel (22) for the receiving second portion (34a,24b) of the retainment member (30).

7. An angling float (1) as in Claims 5 or 6, wherein the second engagement face (25a) comprises a channel (26) for receiving the second portion of the retainment member (30).

8. An angling float (1) as in Claims 4 to 7, wherein the ferrule (25) is permanently secured to attachment part (10) by adhesive bonding.

9. An angling float as in Claims 4 to 7, wherein the ferrule (25) is permanently secured to attachment part (10) by ultrasonic welding.

10. An angling float (1) as in Claim 9, wherein the second engagement face (25a) comprises a ridge (27) following generally the contour of a said channel (22,26) and adapted to melt during ultrasonic welding and secure the second portion (34a,34b), in situ, in said channel (22,26).

## Patentansprüche

1. Angelschwimmer (1), umfassend:
einen Hauptkörper (5);
ein aus dem Hauptkörper (5) hervorstehendes Anbauteil (10), wobei das Anbauteil (10) eine Wand (20) umfasst, die eine längliche Vertiefung (18) zur Aufnahme einer Schwimmerantenne (50) definiert; und
Ein Befestigungsbauelement (30), das einen ersten Teil (32) zum Festhalten des Schwimmers (1) an einer Angelschnur und einen zweiten Teil (34a, 34b) umfasst, **dadurch gekennzeichnet, dass** der zweite Teil (34a, 34b) zum Sichern des Befestigungsbauelements (30) an das Anbauteil (10) bestimmt ist und sich der der zweite Teil (34a, 34b), gänzlich in der Wand (20) eingebettet, um die Vertiefung (18) herum und/oder entlang erstreckt.

2. Ein Angelschwimmer (1) nach Anspruch 1, wobei der zweite Teil (34a, 34b) ein Paar entgegengesetzte Arme (34a, 34b) umfasst, die sich teilweise um die Vertiefung erstrecken.

3. Angelschwimmer (1) nach einem vorhergehenden Anspruch, wobei sich der zweite Teil (34a, 34b) bei Bildung des Anbauteils (10) in die Wand (20) einbettet.

4. Angelschwimmer (1) nach Ansprüchen 1 oder 2, wobei der Anbauteil (10) weiter eine separate Zwinge (25) umfasst, die permanent am Anbauteil (10) gesichert ist, wobei der zweite Teil (34a, 34b) des Befestigungsbauelements (30) zwischen dieser und dem Anbauteil liegt.

5. Angelschwimmer (1) nach Anspruch 4, wobei das Anbauteil (10) einen Körperabschnitt (10) und einen Kopfabschnitt(12) umfasst, der eine erste Eingriffsfläche (16a) aufweist, wobei die Zwinge (25) eine zweite Eingriffsfläche (25a) hat, die ersten und zweiten Eingriffsflächen (16a, 5a) permanent aneinander befestigt sind, wobei der zweite Teil (34a, 34b) des Befestigungsbauelements dazwischen gehalten wird.

6. Angelschwimmer (1) nach Anspruch 5, wobei die erste Eingriffsfläche (16a) einen Kanal (22) zur Aufnahme des zweiten Teils (34a, 34b) des Befestigungsbauelements (30) umfasst.

7. Angelschwimmer (1) nach Anspruch 5 oder 6, wobei die zweite Eingriffsfläche (25a) einen Kanal (26) zur Aufnahme des zweiten Teils des Befestigungsbauelements (30) umfasst.

8. Angelschwimmer (1) nach Anspruch 4 bis 7, wobei die Zwinge (25) durch Kleben permanent am Anbauteil (10) gesichert ist.

9. Angelschwimmer (1) nach Anspruch 4 bis 7, wobei die Zwinge (25) durch Ultraschallschweißen permanent am Anbauteil (10) gesichert ist.

10. Angelschwimmer (1) nach Anspruch 9, wobei die zweite Eingriffsfläche (25a) einen Grat (27) umfasst, der generell der Kontur eines besagten Kanals (22, 26) folgt und angepasst ist, beim Ultraschweißen zu schmelzen und den zweiten Teil (34a, 34b), an Ort und Stelle in besagtem Kanal (22, 26) zu sichern.

## Revendications

1. Un flotteur de pêche (1), composé des éléments suivants :
un corps principal (5) ;
un dispositif de fixation (10) faisant saillie du corps principal (5), ledit dispositif de fixation (10) comprenant une paroi (20) formant un évidemment allongé (18) permettant de recevoir une antenne de flotteur (50) ; et
un dispositif de blocage (30) comprenant une première partie (32) pour la fixation du flotteur (1) sur une ligne de pêche, et un deuxième partie (34a, 34b), **caractérisée par le fait que** la deuxième partie (34a, 34b) assure la fixation du dispositif de blocage (30) au dispositif de fixation (10), et la deuxième partie (34a, 34b) s'étend, entièrement encastrée dans la paroi (20) autour et/ou le long de l'évidemment (18).

2. Un flotteur de pêche (1), conforme à la revendication 1, dans lequel la deuxième partie (34a, 34b) comprend une paire de bras opposés (34a, 34b) qui s'étendent partiellement autour de l'évidemment.

3. Un flotteur de pêche (1), conforme à une quelconque des revendications précédentes, dans lequel la deuxième partie (34a, 34b) est encastrée dans la paroi (20) lors de la formation du dispositif de fixation (10).

4. Un flotteur de pêche (1), conforme aux revendications 1 ou 2, dans lequel le dispositif de fixation (10) comprend également une virole séparée (25) fixée en permanence sur le dispositif de fixation (10), la deuxième partie (34a, 34b) du dispositif de blocage (30) étant intercalée entre ce dernier et le dispositif de fixation.

5. Un flotteur de pêche (1), conforme à la revendication 4 dans lequel le dispositif de fixation (10) comprend un corps (10) et une tête (12) composée d'une face d'engagement (16a), dans laquelle la virole (25) présente une deuxième face d'engagement (25a), les première et deuxième faces d'engagement (16a, 5a) étant fixées en permanence l'une à l'autre, la deuxième partie (34a, 34b) du dispositif de blocage étant intercalé entre ces éléments.

6. Un flotteur de pêche (1), conforme à la revendication 5, dans lequel la première face d'engagement (16a) comprend une gorge (22) chargée de recevoir la deuxième partie (34a, 34b) du dispositif de blocage (30).

7. Un flotteur de pêche (1), conforme aux revendications 5 ou 6, dans lequel la deuxième face d'engagement (25a) comprend une gorge (26) chargée de recevoir la deuxième partie du dispositif de blocage (30).

8. Un flotteur de pêche (1), conforme aux revendications 4 à 7, dans lequel la virole (25) est fixée en permanence au dispositif de fixation (10) par un adhésif.

9. Un flotteur de pêche (1), conforme aux revendications 4 à 7, dans lequel la virole (25) est fixée en permanence au dispositif de fixation (10) par soudage aux ultrasons.

10. Un flotteur de pêche (1), conforme à la revendication 9, dans lequel la deuxième face d'engagement (25a) comprend une arête (27) suivant d'une manière générale le profil de ladite gorge (22, 26) et adapté pour fondre au cours du soudage aux ultrasons et fixer la deuxième partie (34a, 34b), in situ, dans ladite gorge (22, 26).
